(19) Europäisches Patentamt / European Patent Office / Office européen des brevets

(11) **EP 4 530 143 B1**

(12) **EUROPEAN PATENT SPECIFICATION**

(45) Date of publication and mention
of the grant of the patent:
**08.07.2026 Bulletin 2026/28**

(51) International Patent Classification (IPC):
**B60W 40/09** (2012.01)    **B60W 50/06** (2006.01)
**B60W 50/14** (2020.01)    **B60W 50/00** (2006.01)

(21) Application number: **24201565.9**

(22) Date of filing: **20.09.2024**

(52) Cooperative Patent Classification (CPC):
**B60W 50/14; B60W 40/09; B60W 50/06;**
B60W 2050/0088

(54) **METHOD AND ASSISTANCE SYSTEM FOR ASSISTING AN OPERATOR OF AN EGO-AGENT BY PERSONALIZED RISK GUIDANCE**

VERFAHREN UND ASSISTENZSYSTEM ZUR UNTERSTÜTZUNG EINES BEDIENERS EINES EGO-AGENTEN DURCH PERSONALISIERTE RISIKOFÜHRUNG

PROCÉDÉ ET SYSTÈME D'ASSISTANCE POUR AIDER UN OPERATEUR D'UN AGENT ÉGO AU MOYEN D'UN GUIDAGE PERSONNALISÉ DES RISQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.09.2023 US 202318476240**

(43) Date of publication of application:
**02.04.2025 Bulletin 2025/14**

(73) Proprietor: **HONDA MOTOR CO., LTD.
Tokyo 105-8404 (JP)**

(72) Inventor: **Puphal, Tim
63073 Offenbach am Main (DE)**

(74) Representative: **Beder, Jens
Mitscherlich PartmbB
Karlstraße 7
80333 München (DE)**

(56) References cited:
**US-A1- 2020 387 156    US-A1- 2022 315 047**

**Description**

TECHNICAL FIELD

The present invention relates to the field of assisting an operator of an ego-agent. In particular, a method for assisting the operator of an ego-agent, a corresponding program comprising program code, a corresponding non-transitory computer readable storage medium, and an assistance system for assisting the operator of an ego-agent are proposed.

BACKGROUND

When people operate ego-agents in an environment where also other agents are present, there is generally a risk of a collision between the agents. The density of traffic significantly increased over the last years, and it is quite challenging for the operators of the agents to observe all the other agents in the environment in order to react in due time on their behavior such that collisions can be avoided. Further, there are other risks that are encountered in operating a vehicle, for example curve risks or regulatory risks. The performance of modern processors and availability of sensors like radar sensors, cameras, LIDAR sensors or the like providing the processor with information on the environment of the ego-agent enables assistance for operators of ego-agents in their operation of the ego-agent. US 2022/315047 A1 discloses a method for assisting a driver of an ego-vehicle in a traffic situation, wherein an ego-trajectory of the ego-vehicle and a trajectory of a traffic participant are calculated, an ego-trajectory alternative is generated by applying a lateral shift to the calculated ego-trajectory, an uncertainty area at least with respect to a lateral direction is determined for each trajectory, a spatio-temporal closeness of the uncertainty area of the ego-trajectory and the uncertainty area of the trajectory of the traffic participant are estimated for each of the plurality of ego-trajectories. An ego-trajectory is selected from the plurality of ego-trajectories based on the evaluated spatio-temporal closeness. However, the style of operating an ego-agent significantly varies from operator to operator. Thus, in many situations, the assistance system proposes behaviors or even interferes (e.g., in a case of semi-automated driving) with the control operation by the operator in a way that is distracting the operator.

There are some approaches that tried to adapt the systems to individual operator's behaviors so that the operator is not bothered and therefore acceptance of the assistance made by the system is increased. US 9, 623, 878 B2, for example, proposes a driver assistance system, which is personalized and learns from the driver's habits. However, the proposed system adjusts a control parameter, for example, a target distance of an ACC (adaptive cruise control) to the driver's particular driving style. Unfortunately, such approach leads to an assistance system that reflects the individual driving styles but has no effect on the behavior of the driver.

US 2020/387156 A1 discloses systems and methods that include a motion planning module that iteratively determines possible trajectories for a vehicle to follow. The motion planning module calculates an estimated cost associated with each possible trajectory based on cost functions and cost weights, each cost function corresponding to a trajectory evaluation feature, and selects an optimal trajectory having a least associated estimated cost. When the vehicle is operated in a learning mode, a learning module determines a first actual trajectory traveled by the vehicle, compares the first actual trajectory with the optimal trajectory for that time period, and updates the cost weights based on the comparison. When the vehicle is operated in a teaching mode, a teaching module determines a second actual trajectory traveled by the vehicle, compares the second actual trajectory with the optimal trajectory selected for that time period, and generates output to a user of the vehicle based on the comparison.

Quite a number of different approaches have been developed for generating control signals for autonomous driving or partially autonomous driving. One approach is described in US 9,463,797 B2 in which a future trajectory for an ego-agent is predicted and from such prediction a plurality of trajectory alternatives for the ego-agent are generated. Further, a hypothetical future trajectory for another agent is determined and based on at least one pair of trajectories of the ego-agent and of the other agent risk functions over time or along the calculated hypothetical trajectory of the ego-agent alternatives are calculated. These risk functions are then combined in a risk map which is then analyzed to generate the control signal.

US 10,627,812 B2 relates to another problem of known assistance systems. For making a correct prediction, it is necessary that information on the environment used in the prediction algorithm is correct. However, since most of the information is obtained using one or more sensors, certain areas in the environment relevant for correctly assessing the traffic situation may be occluded. US 10,627,812 B2 mitigates the risk of such blind spots by assuming a virtual traffic entity in the area for which the confidence for the sensor data is below a certain threshold or no sensor data is available at all, and lets the virtual traffic entity interact with a predicted behavior of the ego-agent. A respective risk measure is estimated and the estimated risk measure is taken into consideration for a controlling action of the ego-agent.

US 2020/0231149 A1 supports a driver of an ego-agent by considering priority relationships between the ego-agent and at least one other traffic participant and selecting a respective prediction model for the traffic participant. The selection of the prediction model therefore takes into consideration the determined priority relationship between the involved agents and therefore improves the assistance by a more precise prediction of the future behavior of the other agent.

EP 4 068 153 A1 describes an advanced driver assistance system in which, based on information received from sensors, a feature of the environment is determined and the risk zone of the feature is estimated. The feature and the risk zone of the feature are then displayed on a displayed together with the environment of the vehicle in a map.

As the above provided examples of known assistance systems clearly show, there are several different approaches in order to estimate the risk and provide an operator of an agent with information on that risk or to adapt control of an agent to the habits of its operator. However, there is still the problem that the style of one operator of an agent in the traffic situation may significantly differ from another agent's style. This may lead to misinterpretations of a specific situation, which is not only difficult for a human operator but also for automated systems. Thus, there is still a need to find a way of harmonizing the styles of operation of the plurality of agents' operators involved in a traffic situation. Such a harmonization could significantly increase the quality of prediction and their confidences and would, thus, directly improve traffic safety.

SUMMARY

With the present invention this problem is solved by adapting the estimation of a future risk based on habits of the individual operator but, contrary to what is known from the prior art, not by only by trying to meet the operator's expectations, but further considering a difference between the style of the operator and a target style. This is achieved by an adaptation in the estimation of future risks so that the communicated output finally educates the operator (driver) towards the target style. This target style is e.g., an average driving style and if operating in line with the target style could be reached for any operator of an agent, the dangerous differences in driving style between different agents could be reduced.

According to the invention, this is achieved by a method, corresponding program, computer-readable storage medium and assistance system comprising, respectively , the features of claims 1, 15, 16, and 17, for assisting an operator by communicating an estimated risk to the operator with the estimation of the risk being adapted to influence operation of the ego-agent starting from an analysis of the operator's driving habits. First, a behavior planning algorithm using a first value of the parameter and a second value of the parameter in a cost function of a behavior planning algorithm is executed to determine a first and a second planned behavior of the ego-agent. Further, the current state of the ego-agent is determined in order to derive the actual behavior of the ego-agent operated by its operator.

A personalized parameter value for the parameter in the cost function reflecting this actual behavior is then estimated based on the relation of the first and the second planned behavior, and the actual behavior of the ego-agent. Using such a personalized parameter value in the behavior planning algorithm would result in a planned behavior corresponding to the habits of the operator of the ego-agent. Since this does not lead to any change in the operator's habits but only models the operator's style in the cost function used for behavior planning, the invention proposes to correct the personalized parameter value using a parameter correction value. Determining the parameter correction value is at least based on the estimated personalized parameter value and a target parameter value for the parameter in the cost function. For example, knowing the target parameter value and the personalized parameter value estimated for the individual operator allows to shift the personalized parameter value towards the target parameter value thereby generating an adapted parameter value by correcting the personalized parameter value using the parameter correction value.

More than two parameter values can be used as well to determine more than two planned behaviors. An improved estimation of the personalized parameter value can be accordingly done using these more than two planned behaviors, for example by better interpolation.

This adapted parameter value is then applied in the behavior planning algorithm and a risk is estimated by generating a risk map using the adapted parameter value. This risk is finally communicated to the operator. So the risk communicated to the operator corresponds more to the risk that would be communicated to an operator with an average style. Since the estimation and communication of the risk no longer precisely reflects the style of the operator, this causes a training effect of the assisted operator finally harmonizing the styles of all assisted operators.

According to an embodiment, the personalized parameter value is estimated using interpolating the actual behavior with the first and second planned behavior. Using interpolation for estimating the personalized parameter value has the advantage that the estimation can be made online, which means during operation of the ego-agent. As a consequence, even when the style of the operator changes, the guidance will be kept effective.

Further, the personalized parameter value can be estimated using a comparison of the acceleration of the actual behavior and the acceleration according to the first and second planned behavior. Acceleration can easily be sensed for the ego-agent and no or almost no preprocessing of the sensor values is necessary. This reduces the computational costs and improves the real time application, for example, in a vehicle.

According to an embodiment of the invention, the parameter correction value is calculated based on a difference between the target parameter value and the personalized parameter value, and a correction coefficient. This has the advantage that on the one hand it is directly considered how much the actual behavior differs from the target behavior, resulting in a greater correction in case that a greater difference is recognized. On the other hand, the correction value allows a further adjustment how strong the correction is. It is in particular possible to determine the value of the correction coefficient based at least on one of: amount of the difference between the personalized parameter value and the target parameter value, and an operator condition. So starting from the difference between the actual behavior and the target behavior, and a constant correction coefficient, even more aspects can be taken into consideration.

According to another advantageous embodiment, the estimation of the personalized parameter value is repeatedly executed during operation of the ego-agent. Repeatedly estimating the personalized parameter value allows to adjust the correction to the actual behavior which may change during operation of the ego-agent.

On the other hand, it might be preferred to estimate the personalized parameter value based on a plurality of actual parameter values estimated based on the relation of the first and second planned behavior and an actual behavior of the ego-agent. Taking into consideration a plurality of actual parameter values avoids that for every change of an estimated actual parameter value the personalized parameter value follows this change. For example, a moving average could be calculated from a certain number of actual parameter values or hysteresis could be applied, filtering small changes in the estimated actual parameter values. The personalized parameter value is then updated only if a significant change in the style of the operator is recognized.

According to another preferred embodiment, the last personalized parameter value estimated during a previous operation of the ego-agent is used as the personalized parameter value for the risk estimation of a current operation. If the starting point is the personalized parameter value estimated during previous operation of the ego-agent, it is specifically preferred to update the last personalized parameter value estimated during a previous operation of the ego-vehicle with the personalized parameter value estimated during the current operation of the ego-vehicle and the updated personalized parameter is then used as the personalized parameter value for the risk estimation of the current operation. In order to enable such use of a previously estimated personalized parameter value, the system comprises a non-volatile memory in which the latest personalized parameter value is stored.

Actual parameter values can be estimated repeatedly based on the relation of the first and second planned behavior, and an actual behavior of the ego-agent, and a confidence measure can be calculated for the latest actual parameter value. This last actual parameter value is taken over as the personalized parameter value when its confidence measure exceeds a confidence threshold. The confidence threshold, for example, quantifies the frequency of changes of the personalized parameter value.

The parameter value lies in an interval and, for determining a first and a second planned behavior, a lower limit of the interval is used as the first value of the parameter and the upper limit of the interval is used as the second value of the parameter. So if the extreme values defined by the limits of the interval are used in order to determine the first and the second planned behavior, it is easily possible to use an interpolation for estimating personalized parameter value with a high accuracy. The interpolation may use a step function, linear function, two concatenated linear functions or sigmoid function for estimating the actual parameter values.

It is to be noted that the personalized parameter value and an actual parameter value can be used interchangeably for embodiments in which no processing of the actual parameter values is made to derive the personalized parameters. The estimation of the personalized parameter values is the same as the estimation of the actual parameter value. However, for explanation of embodiments that process the actual parameter to determine the personalized parameter, it will be distinguished between "personalized" and "actual".

The cost function preferably comprises, in addition to a risk component, at least one of: a utility component and a comfort component, each component being weighted with a dedicated parameter. Having such a cost function comprising a plurality of different components allows to guide the operator of ego-agent towards the desired behavior not only with respect to aspects of risk but also to other aspects like utility or comfort. In such a case, the method is executed in respect of the risk component, and, in addition, in respect of at least one of the utility component and the comfort component.

Further, the development of the correction value over time can be evaluated and a feedback on the evaluation result is provided to the operator. The correction values are then stored on a non-volatile memory and after a predetermined time interval or upon request (for example from the operator), an evaluation of the course of the correction values over time is made.

It is to be noted that the present invention can be applied for all kinds of vehicles including planes, boats, micro mobility robots but even pedestrians. In most cases, the operator of the ego-agent will be the driver of a ego-vehicle, pilot of a plane and so on. However, the operator may even control the ego-agent from a remote position.

BRIEF DESCRIPTION OF THE DRAWINGS

The description of embodiments refers to the enclosed figures, in which:

Figure 1 illustrates different components of a cost function used for behavior planning,
Figure 2: illustrates the meaning of risk maps
Figure 3: illustrates relation between behavior planning based on risk maps and parameter values in a cost function
Figure 4 shows a block diagram of the process of estimating a personalized parameter value
Figure 5 shows the process of creating an output communicating a risk based on an adapted parameter value
Figure 6 shows the effect of a correction value

DETAILED DESCRIPTION

Before all the estimation and determination steps are explained in more detail, the general background of the present invention and the effect of educating the operator shall be explained.

The individual style of an operator with which the operator operates the ego-agent can be modelled using coefficients weighting the individual components in a cost function that is used in behavior planning. The cost function can be described as:

$$cost = \alpha * risk - \beta * utility + \gamma * comfort$$

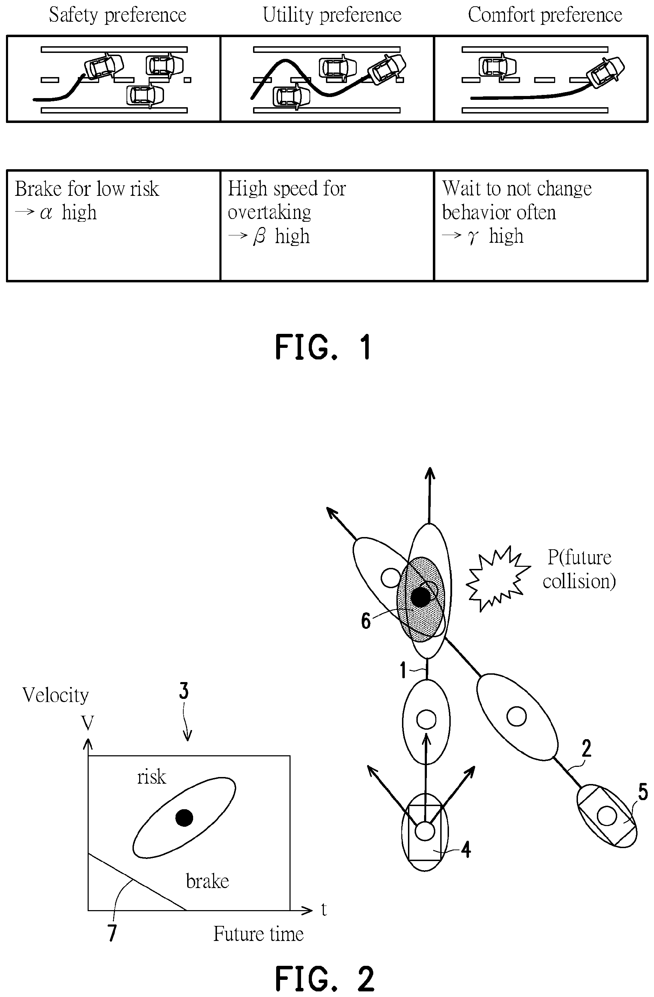

The parameters $\alpha$, $\beta$ and $\gamma$ adjust the overall cost function and can have values from an interval from a lower limit to an upper limit. It is to be noted that the interval does not need to be the same for all the parameters. The influence of the values a parameter can have are illustrated in figure 1. On the left side the first component of the cost function is illustrated describing the safety preference.

On the left side of figure 1, the safety preference is illustrated. For the first parameter $\alpha$ having a high value, the resulting cost function will lead to a planned behavior with braking already for low risks. So the first parameter $\alpha$ takes account of the risk, which is accepted in the planned behavior. In the same way, the second parameter $\beta$ defines utility preference, which means, for example, that a respectively planned behavior allows high-speed overtaking in case that the value for the second parameter $\beta$ is set high. Finally, as illustrated in the right part of figure 1, the third parameter $\gamma$ relates to the comfort preference and will result in a planned behavior that rather waits to not change an actual behavior often, when the third parameter $\gamma$ is set to a high value.

The cost function and the resulting planned behavior when a behavior planning algorithm is executed using the cost function with given parameters allow on the other hand to model an operating style of an operator. So while originally the values for the three parameters define in which way a behavior in a certain situation is planned, it is also possible to determine from an observed actual behavior of the ego-agent the corresponding parameter values, which describe the habits and style of an operator. The first parameter $\alpha$ for example describes how close and operator (ego-agent) approaches other agents or how long he/she is staying close to other agents. The second parameter $\beta$ describes how fast an operator wants to reach the destination or how often he/she changes lanes. Finally, the third parameter $\gamma$ describes

how often the operator is accelerating or decelerating and how strong the acceleration or deceleration is.

Figure 2 illustrates the principle how risk maps are used for behavior planning. Based on predicted trajectories 1, 2 of an ego-agent and another agent, and taking into consideration Gaussian and Poisson distributions for uncertainties in space and time, which may result from sensor uncertainties, for example, a risk map 3 can be created in which the velocity v is presented over time. The right side of figure 2 shows intersecting trajectories 1, 2 for the ego-agent 4 and another agent 5 and the respective distributions of the positions of the ego-agent 4 and the other agent 5 over time, which means along the trajectories 1, 2. These distributions of the positions of the agents 4, 5 over time allows to determine an area 6 of a predicted collision between the agents. This predicted collision is included in the risk map 3 shown on the left side of figure 2, in which in addition to the risk, a way around the risk for the ego-agent 4 is included. In the illustration, the collision can be avoided by performing a deceleration of the ego-agent 7.

It is to be noted that apart from behavior planning, risk maps may also be used in order to create warnings and communicate the identified risks to the operator of the ego-agent. Such communication of risks or outputting of warnings and also behavior planning with risk maps is known in the art.

The trajectories are calculated in a known manner using information on vehicle states that are obtained from sensors mounted or carried by the agent. This information can be enhanced with agent-to-agent information. The obtained information is processed by a processor which performs the computational steps for the planning as explained above, but, with respect to the present invention also the estimation, correction and all other computations described below.

For the following explanations, the aspect "risk" will be mainly used for the explanations. However, these explanations are similarly valid for estimating a personalized parameter value $\beta$, $\gamma$ for the components "utility" and/or "comfort".

Based on risk maps that are used in a behavior planner as explained above, a personalized parameter value can be estimated from the cost function as given below.

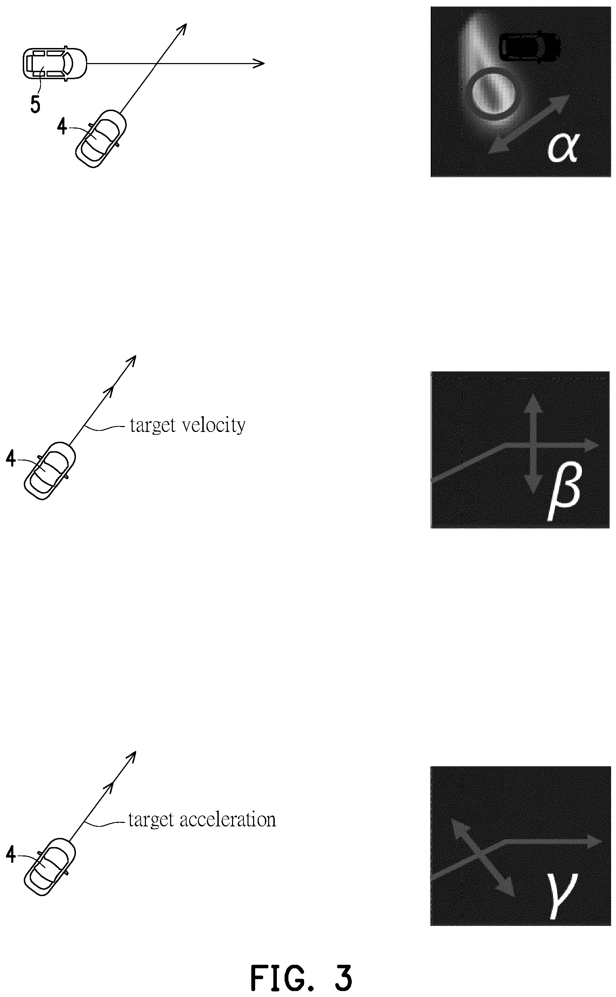

As explained previously, the values of the three parameters result in different planned behaviors. The first parameter $\alpha$ is particularly relevant with respect to a risk of a collision when another agent is involved. It may be understood as a measure for the size of the risk zone, as illustrated in the upper part of figure 3. The smaller the value of the first parameter $\alpha$, the smaller is the size of the risk zone, and vice versa.

In the middle of figure 3, the influence of the value of the second parameter $\beta$ is shown. This regards situations when the ego-agent 4 is alone, because the value of the second parameter $\beta$ influences the target velocity. Similarly, the value of the third parameter $\gamma$

regards the acceleration. These relations between the values of the three parameters $\alpha$, $\beta$, $\gamma$ are exploited in order to estimate a personalized parameter value. For the following explanations it will only be referred to the first parameter $\alpha$ for keeping the explanations concise.

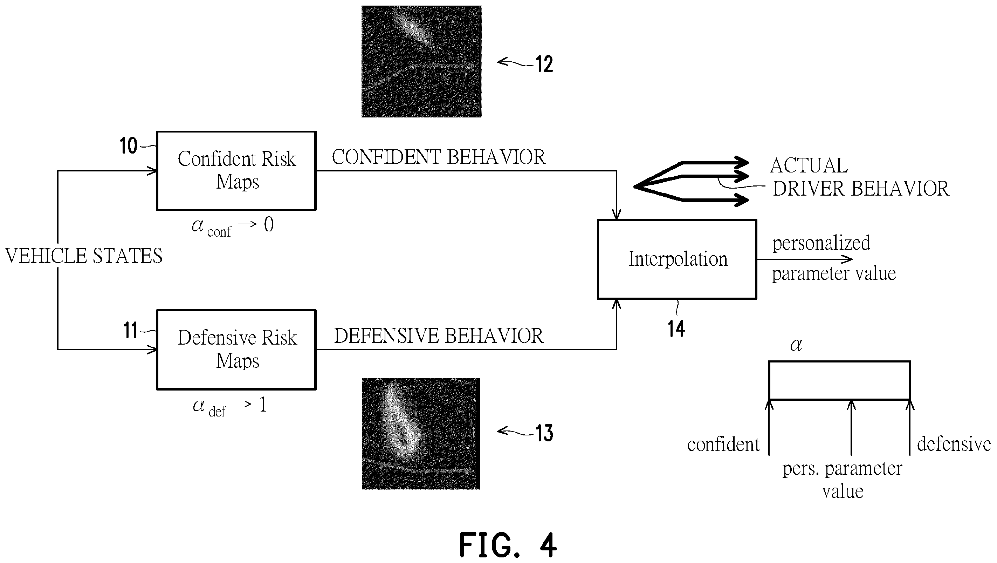

Figure 4 illustrates the procedure to estimate a value for the personalized first parameter. First, based on an actual vehicle state, two risk maps are created. A first risk map 10 is created using a first value for the first parameter $\alpha$, and a second risk map 11 is created using a second value for the first parameter $\alpha$. It is preferred that the parameter values used correspond to the lower limit (e.g., $\alpha = 0$, beginner driver) and the upper limit (e.g., $\alpha = 1$, confident driver) of an interval for the values of the first parameter $\alpha$. For both created risk maps 10, 11, behavior planning is performed resulting in two different planned behaviors 12, 13, denoted in figure 4 as "confident behavior" and "defensive behavior".

Then, based on the two planned behaviors 12, 13 and the actual behavior of the ego-agent, interpolation 14 is performed using current vehicle states, which are also used for the determination of the planned behaviors 12, 13, in order to derive from the vehicle states the current behavior of the ego-agent 4 corresponding to the actual control performed by the operator, and, as a result the actual parameter value. It is to be noted that the actual parameter value is the same as the personalized parameter value in case that no further processing of the estimated value is made. This interpolation may be made, for example, by comparing acceleration values of the planned behaviors and the actual behavior.

In the lower right of figure 4, the interval of values that the first parameter $\alpha$ may take and the resulting personalized parameter value for the operator (driver) relative to the planned behaviors resulting from the planning algorithm using the lower limit and the upper limit as parameter values is illustrated.

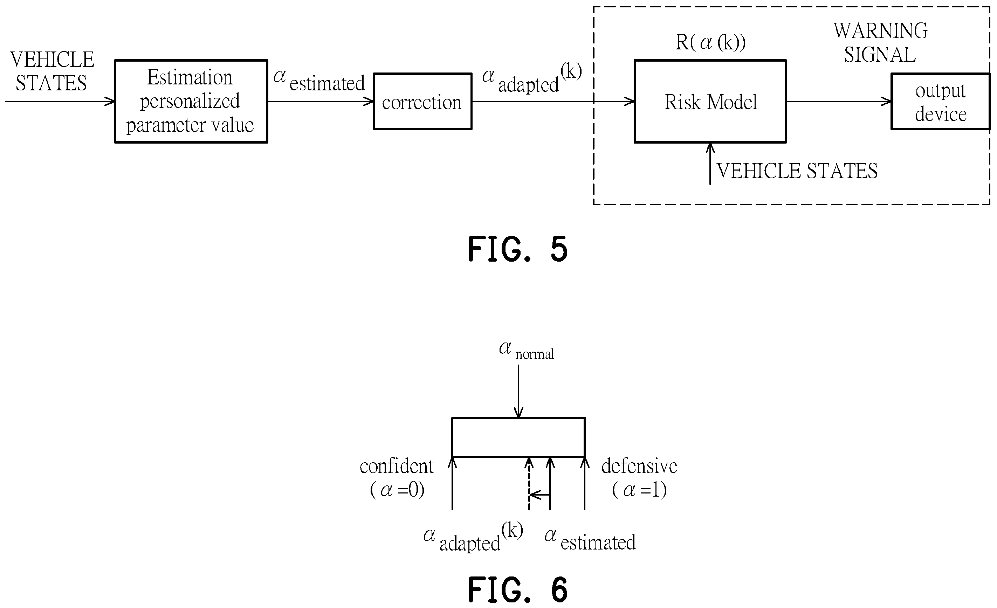

Once the personalized parameter value is estimated, a correction is performed in order to generate an adapted parameter value used to estimate the risk by generating a risk map using the adapted parameter value. This process is illustrated in figure 5. After the personalized parameter value is determined in 15, the parameter correction value is determined and applied to the personalized parameter value in 16. The estimation in 15 may also comprise the processing of actual parameter values to determine the personalized parameter value as explained above. By correcting the personalized parameter value, an adapted parameter value is generated. This adapted parameter value, indicated by $\alpha(k)$ in the drawing, is input into the risk model. The risk model, based on the adapted parameter value and the vehicle states, generates the warning signal to be communicated to the operator. This communication may be a continuous output to the operator providing warnings over a human machine interface or by semi-autonomously adjusting the control input from the operator. The calculation of a risk map and the determination of a risk to be communicated to the operator do not differ from prior art approaches. However, according to the invention, the parameter values for application of the risk model or generation of the risk map are not only adapted to the operator's style but further corrected to achieve the educational effect. For communicating, the system comprises a display on which warning or risk measures can be displayed. Alternatively, the communication can use a loudspeaker or audio signal supplied to headphones or a similar device for communication.

In figure 6, in addition to the first value of the first parameter and the second value of the first parameter, the personalized parameter value and its shift by the correction value is illustrated. The figure also shows a "normal value" for the first parameter, which is the target value that might be chosen to correspond to an average skilled operator. This "normal value" constitutes the target value in the explained embodiment. However, it is not necessary that this value is the average of the entirety of operators. The value can be set in order to guide all operators towards safer operation of their ego-agents.

The adapted parameter value is calculated as:

$$\alpha_{\text{adapted}}(k) = \alpha_{\text{estimated}} + (\alpha_{\text{normal}} - \alpha_{\text{estimated}}) * k$$

k is a correction coefficient allowing to adjust how strong the correction is for a given difference between the personalized parameter value $\alpha_{\text{estimated}}$ and the target value $\alpha_{\text{normal}}$. Basis for the calculation of the adapted parameter value $\alpha_{\text{adaoted}}(k)$ is the deviation of the estimated parameter value $\alpha_{\text{estimated}}$ from the normal parameter value $\alpha_{\text{normal}}$, and k can be freely set in an interval, for example between 0 and 1, according to the desired effect. A correction value of k =0.1, for example, may slowly guide the driver to the average safe driving style.

In order to adjust the intensity of the effect, the correction coefficient may be adjusted. For example, if it is recognized that the driver has a low awareness, is sleepy and/or stressed, it may be desirable to provide a smaller correction value. Since the difference between the estimated parameter value $\alpha_{\text{estimated}}$ and the normal parameter value $\alpha_{\text{normal}}$ is still the same, the correction coefficient k is then adjusted towards 0. On the other hand, in case that the operator's awareness is high, the operator is not sleepy or stressed, a stronger correction might be desired. By adjusting the coefficient to be higher (k->1), this effect can be achieved.

Another way of adapting the correction coefficient k is to take into consideration the amount of the deviation of the estimated parameter value $\alpha_{\text{estimated}}$ from the normal parameter value $\alpha_{\text{normal}}$. For example, the correction coefficient k can be increased for smaller differences and decreased for large differences. The reduction of the correction coefficient k for large differences avoids that the driver is overstrained. On the other hand, the increase of the correction coefficient k for small differences ensures that the adaptation of the parameter value still has an effect. Otherwise, it would be neglectable the closer the operator's style is to the normal style. A table associating the correction values with the calculated differences can be stored in a memory and retrieved by the processor executing all the calculations and determinations explained above in order to estimate the risk.

It is to be noted that the explanations given so far do not distinguish between the personalized parameter value and an actual parameter value for the current behavior of the ego-agent. This means that the actual parameter value that is estimated as explained above, for example by an interpolation, is directly used as personalized parameter value for further processing and estimating a risk to be communicated to the operator. However, it might be preferred to estimate a plurality of actual parameter values and, based thereon, determine a personalized parameter value. This avoids that fluctuations of the actual parameter value directly affect the estimation of the risk.

**Claims**

1. A method for assisting an operator of an ego-agent (4) by communicating a risk in a future situation to the operator, the method comprising the steps of:

   - applying a behavior planning algorithm using at least a first value for a parameter ($\alpha$, $\beta$, $\gamma$) and a second value for the parameter ($\alpha$, $\beta$, $\gamma$) in a cost function of the behavior planning algorithm to determine at least a first and a second planned behavior (12, 13) of the ego-agent (4),
   - determining a current state of the ego-agent (4) to determine an actual behavior of the ego-agent (4),
   - estimating a personalized parameter value ($\alpha_{estimated}$) for the parameter ($\alpha$, $\beta$, $\gamma$) in the cost function based on a relation of at least the first and second planned behavior (12, 13) and the actual behavior of the ego-agent (4),
   - determining a parameter correction value at least based on the personalized parameter value and a target parameter value for the parameter ($\alpha$, $\beta$, $\gamma$) in the cost function,
   - generating an adapted parameter value ($\alpha_{adapted}$) for the parameter ($\alpha$, $\beta$, $\gamma$) in the cost function by correcting the personalized parameter value using the parameter correction value,
   - applying the behavior planning algorithm based on the adapted parameter value ($\alpha_{adapted}$) and estimating a future risk by generating a risk map using the adapted parameter value ($\alpha_{adapted}$), and
   - communicating the estimated risk to the operator.

2. The method according to claim 1, wherein

   - the estimation of the personalized parameter value ($\alpha_{estimated}$) includes interpolating the actual behavior with the at least first and second planned behavior by comparing acceleration values of the at least first and second planned behaviors (12, 13) of the ego-agent (4) and the actual behavior of the ego-agent (4).

3. The method according to claim 1 or 2, wherein

   - the estimation of the personalized parameter value ($\alpha_{estimated}$) includes comparing an acceleration of the actual behavior with an acceleration according to at least the first and second planned behaviors (12, 13).

4. The method according to any of the preceding claims, wherein

   - the parameter correction value is calculated based on a difference between the target parameter value and the personalized parameter value, and a correction coefficient.

5. The method according to claim **4,** wherein a value of the correction coefficient is determined based at least on one of: a difference between the personalized and the target parameter value, and an operator condition.

6. The method according to any of the preceding claims, wherein

   - the estimation of the personalized parameter value is repeatedly executed during operation of the ego-agent (4).

7. The method according to any of the preceding claims, wherein

   - the personalized parameter value is estimated based on a plurality of actual parameter values estimated based on the relation of at least the first and second planned behaviors (12, 13) and the actual behavior of the ego-agent (4).

8. The method according to any one of claims 1 to 6, wherein

   - the last personalized parameter value estimated during a previous operation of the ego-agent (4) is used as the personalized parameter value for the risk estimation of a current operation.

9. The method according to any one of claims 1 to 6, wherein

- the last personalized parameter value estimated during a previous operation of the ego-agent (4) is updated with the personalized parameter value estimated during the current operation of the ego-agent (4) and the updated personalized parameter is used as the personalized parameter value for the risk estimation of the current operation.

10. The method according to any of the preceding claims, wherein

- actual parameter values are estimated repeatedly based on the relation of at least the first and second planned behavior (12, 13) and an actual behavior of the ego-agent (4) and a confidence measure is calculated for a latest actual parameter value, which is taken over as the personalized parameter value when its confidence measure exceeds a confidence threshold.

11. The method according to any of the preceding claims, wherein

- the values of the parameter ($\alpha$, $\beta$, $\gamma$) are in an interval and a lower limit of the interval is used as the first value of the parameter ($\alpha$, $\beta$, $\gamma$) and an upper limit of the interval is used as the second value of the parameter ($\alpha$, $\beta$, $\gamma$).

12. The method according to any of the preceding claims, wherein

- the cost function comprises, in addition to a risk component, at least one of: a utility component and a comfort component, and each component is weighted with a dedicated parameter ($\alpha$, $\beta$, $\gamma$).

13. The method according to claim 12, wherein the method is executed in respect of the risk component, and, in addition, in respect of at least one of the utility component and the comfort component.

14. The method according to any of the preceding claims, wherein

- a development of the correction value over time is evaluated and a feedback on the evaluation result is provided to the operator.

15. A program comprising program-code means for executing a method for assisting an operator of an ego-agent (4), when the program is executed on a computer or digital signal processor, wherein the method comprises:

- applying a behavior planning algorithm using at least a first value of a parameter ($\alpha$, $\beta$, $\gamma$) and a second value of the parameter ($\alpha$, $\beta$, $\gamma$) in a cost function of the behavior planning algorithm to determine at least a first and a second planned behavior,
- determining a current state of the ego-agent (4) to determine an actual behavior,
- estimating a personalized parameter value ($\alpha_{estimated}$) for the parameter ($\alpha$, $\beta$, $\gamma$) in the cost function based on a relation of the at least first and second planned behavior (12, 13) of the ego-agent (4), and an actual behavior of the ego-agent (4),
- determining a parameter correction value at least based on the personalized parameter value and a target parameter value for the parameter ($\alpha$, $\beta$, $\gamma$) in the cost function,
- generating an adapted parameter value ($\alpha_{adapted}$) for the parameter ($\alpha$, $\beta$, $\gamma$) in the cost function by correcting the personalized parameter value ($\alpha_{estimated}$) using the parameter correction value,
- applying the behavior planning algorithm based on the adapted parameter value ($\alpha_{adapted}$) and estimating a future risk by generating a risk map using the adapted parameter value ($\alpha_{adapted}$), and
- generating an output signal for communicating the estimated risk to the operator.

16. A non-transitory computer-readable storage medium embodying a program of machine-readable instructions executable by a digital processing apparatus, which cause the digital processing apparatus to perform:

- applying a behavior planning algorithm using at least a first value of a parameter ($\alpha$, $\beta$, $\gamma$) and a second value of the parameter ($\alpha$, $\beta$, $\gamma$) in a cost function of the behavior planning algorithm to determine at least a first and a second planned behavior (12, 13) of the ego-agent (4),
- determining a current state of the ego-agent (4) to determine an actual behavior of the ego-agent (4),
- estimating a personalized parameter value ($\alpha_{estimated}$) for the parameter ($\alpha$, $\beta$, $\gamma$) in the cost function based on a relation of the at least first and second planned behavior (12, 13) and an actual behavior of the ego-agent (4),
- determining a parameter correction value at least based on the personalized parameter value and a target parameter value for the parameter ($\alpha$, $\beta$, $\gamma$) in the cost function,
- generate an adapted parameter value ($\alpha_{adapted}$) for the parameter ($\alpha$, $\beta$, $\gamma$) in the cost

function by correcting the personalized parameter value using the parameter correction value,

- applying the behavior planning algorithm based on the adapted parameter value and estimating a risk by generating a risk map using the adapted parameter value ($\alpha_{adapted}$), and

- generating an output signal for communicating the estimated risk to the operator.

17. An assistance system for assisting an ego-agent (4), the system comprises a processor configured to

- apply a behavior planning algorithm using at least a first value of a parameter ($\alpha$, $\beta$, $\gamma$) and a second value of the parameter ($\alpha$, $\beta$, $\gamma$) in a cost function of the behavior planning algorithm to determine at least a first and a second planned behavior (12, 13) of the ego-agent (4),

- determine a current state of the ego-agent (4) to determine an actual behavior of the ego-agent (4),

- estimate a personalized parameter value ($\alpha_{estimated}$) for the parameter ($\alpha$, $\beta$, $\gamma$) in the cost function based on a relation of the at least first and second planned behavior (12, 13) and the actual behavior of the ego-agent (4),

- determine a parameter correction value at least based on the personalized parameter value and a target parameter value for the parameter in the cost function,

- generate an adapted parameter value ($\alpha_{adapted}$) for the parameter ($\alpha$, $\beta$, $\gamma$) in the cost function by correcting the personalized parameter value using the parameter correction value,

- apply the behavior planning algorithm based on the adapted parameter value ($\alpha_{adapted}$) and estimate a risk by generating a risk map using the adapted parameter value ($\alpha_{adapted}$), and

- communicate the estimated risk to the operator.

**Patentansprüche**

1. Verfahren zum Unterstützen eines Bedieners eines Ego-Agenten (4) durch Kommunizieren eines Risikos in einer zukünftigen Situation für den Bediener, wobei das Verfahren die Schritte umfasst:

- Anwenden eines Verhaltensplanungsalgorithmus unter Verwendung mindestens eines ersten Werts für einen Parameter ($\alpha$, $\beta$, $\gamma$) und eines zweiten Werts für den Parameter ($\alpha$, $\beta$, $\gamma$) in einer Kostenfunktion des Verhaltensplanungsalgorithmus, um mindestens ein erstes und ein zweites geplantes Verhalten (12, 13) des Ego-Agenten (4) zu bestimmen,

- Bestimmen eines aktuellen Zustands des Ego-Agenten (4), um ein tatsächliches Verhalten des Ego-Agenten (4) zu bestimmen,

- Schätzen eines personalisierten Parameterwerts ($\alpha_{geschätzt}$) für den Parameter ($\alpha$, $\beta$, $\gamma$) in der Kostenfunktion basierend auf einer Beziehung mindestens des ersten und des zweiten geplanten Verhaltens (12, 13) und des tatsächlichen Verhaltens des Ego-Agenten (4),

- Bestimmen eines Parameterkorrekturwerts mindestens basierend auf dem personalisierten Parameterwert und einem Zielparameterwert für den Parameter ($\alpha$, $\beta$, $\gamma$) in der Kostenfunktion,

- Erzeugen eines angepassten Parameterwerts ($\alpha_{angepasst}$) für den Parameter ($\alpha$, $\beta$, $\gamma$) in der Kostenfunktion durch Korrigieren des personalisierten Parameterwerts unter Verwendung des Parameterkorrekturwerts;

- Anwenden des Verhaltensplanungsalgorithmus basierend auf dem angepassten Parameterwert ($\alpha_{angepasst}$) und Schätzen eines zukünftigen Risikos durch Erzeugen einer Risikokarte unter Verwendung des angepassten Parameterwerts ($\alpha_{angepasst}$) und

- Kommunizieren des geschätzten Risikos an den Bediener.

2. Verfahren nach Anspruch 1, wobei

- die Schätzung des personalisierten Parameterwerts ($\alpha_{geschätzt}$) ein Interpolieren des tatsächlichen Verhaltens mit dem mindestens ersten und zweiten geplanten Verhalten durch Vergleichen von Beschleunigungswerten des mindestens ersten und zweiten geplanten Verhaltens (12, 13) des Ego-Agenten (4) und des tatsächlichen Verhaltens des Ego-Agenten (4) einschließt.

3. Verfahren nach Anspruch 1 oder 2, wobei

- die Schätzung des personalisierten Parameterwerts ($\alpha_{geschätzt}$) ein Vergleichen einer Beschleunigung des tatsächlichen Verhaltens mit einer Beschleunigung gemäß mindestens dem ersten und zweiten geplanten Verhalten (12, 13) einschließt.

4. Verfahren nach einem der vorhergehenden Ansprüche, wobei

- der Parameterkorrekturwert basierend auf einer Differenz zwischen dem Zielparameterwert und dem personalisierten Parameterwert und einem Korrekturkoeffizienten berechnet wird.

5. Verfahren nach Anspruch 4, wobei

ein Wert des Korrekturkoeffizienten basierend auf mindestens einem bestimmt wird von: einer Differenz zwischen dem personalisierten und dem Zielparameterwert und einer Bedienerbedingung.

6. Verfahren nach einem der vorhergehenden Ansprüche, wobei

- die Schätzung des personalisierten Parameterwerts während des Betriebs des Ego-Agenten (4) wiederholt ausgeführt wird.

7. Verfahren nach einem der vorhergehenden Ansprüche, wobei

- der personalisierte Parameterwert basierend auf einer Vielzahl tatsächlicher Parameterwerte, die basierend auf der Beziehung mindestens des ersten und des zweiten geplanten Verhaltens (12, 13) und des tatsächlichen Verhaltens des Ego-Agenten (4) geschätzt werden, geschätzt wird.

8. Verfahren nach einem der Ansprüche 1 bis 6, wobei

- der letzte personalisierte Parameterwert, der während eines vorherigen Betriebs des Ego-Agenten (4) geschätzt wurde, als der personalisierte Parameterwert für die Risikoschätzung eines aktuellen Betriebs verwendet wird.

9. Verfahren nach einem der Ansprüche 1 bis 6, wobei

- der letzte personalisierte Parameterwert, der während eines vorherigen Betriebs des Ego-Agenten (4) geschätzt wurde, mit dem personalisierten Parameterwert, der während des aktuellen Betriebs des Ego-Agenten (4) geschätzt wurde, aktualisiert wird und der aktualisierte personalisierte Parameter als der personalisierte Parameterwert für die Risikoschätzung des aktuellen Betriebs verwendet wird.

10. Verfahren nach einem der vorhergehenden Ansprüche, wobei

- Istparameterwerte basierend auf der Beziehung mindestens des ersten und des zweiten geplanten Verhaltens (12, 13) und eines Istverhaltens des Ego-Agenten (4) wiederholt geschätzt werden und ein Konfidenzmaß für einen letzten Istparameterwert, der als der personalisierte Parameterwert übernommen wird, wenn sein Konfidenzmaß eine Konfidenzschwelle überschreitet, berechnet wird.

11. Verfahren nach einem der vorhergehenden Ansprüche, wobei

- die Werte des Parameters ($\alpha$, $\beta$, $\gamma$) in einem Intervall sind und eine Untergrenze des Intervalls als der erste Wert des Parameters ($\alpha$, $\beta$, $\gamma$) verwendet wird und eine Obergrenze des Intervalls als der zweite Wert des Parameters ($\alpha$, $\beta$, $\gamma$) verwendet wird.

12. Verfahren nach einem der vorhergehenden Ansprüche, wobei

- die Kostenfunktion zusätzlich zu einer Risikokomponente mindestens eines umfasst von: einer Nutzkomponente und einer Komfortkomponente, und jede Komponente wird mit einem dedizierten Parameter ($\alpha$, $\beta$, $\gamma$) gewichtet.

13. Verfahren nach Anspruch 12, wobei das Verfahren in Bezug auf die Risikokomponente und zusätzlich in Bezug auf mindestens eine von der Nutzkomponente und der Komfortkomponente ausgeführt wird.

14. Verfahren nach einem der vorhergehenden Ansprüche, wobei

- eine Entwicklung des Korrekturwerts im Laufe der Zeit ausgewertet wird und dem Bediener eine Rückmeldung über das Auswertungsergebnis bereitgestellt wird.

15. Programm, das Programmcodemittel zum Ausführen eines Verfahrens zum Unterstützen eines Bedieners eines Ego-Agenten (4) umfasst, wenn das Programm auf einem Computer oder einem Digitalsignalprozessor ausgeführt wird, wobei das Verfahren umfasst:

- Anwenden eines Verhaltensplanungsalgorithmus unter Verwendung mindestens eines ersten Werts eines Parameters ($\alpha$, $\beta$, $\gamma$) und eines zweiten Werts des Parameters ($\alpha$, $\beta$, $\gamma$) in einer Kostenfunktion des Verhaltensplanungsalgorithmus, um mindestens ein erstes und ein zweites geplantes Verhalten zu bestimmen,
- Bestimmen eines aktuellen Zustands des Ego-Agenten (4), um ein tatsächliches Verhalten zu bestimmen,
- Schätzen eines personalisierten Parameterwerts ($\alpha_{geschätzt}$) für den Parameter ($\alpha$, $\beta$, $\gamma$) in der Kostenfunktion basierend auf einer Beziehung des mindestens ersten und zweiten geplanten Verhaltens (12, 13) des Ego-Agenten (4) und eines tatsächlichen Verhaltens des Ego-Agenten (4),
- Bestimmen eines Parameterkorrekturwerts mindestens basierend auf dem personalisierten Parameterwert und einem Zielparameterwert für den Parameter ($\alpha$, $\beta$, $\gamma$) in der Kostenfunktion,

- Erzeugen eines angepassten Parameterwerts ($\alpha_{angepasst}$) für den Parameter ($\alpha$, $\beta$, $\gamma$) in der Kostenfunktion durch Korrigieren des personalisierten Parameterwerts ($\alpha_{geschätzt}$) unter Verwendung des Parameterkorrekturwerts;
- Anwenden des Verhaltensplanungsalgorithmus basierend auf dem angepassten Parameterwert ($\alpha_{angepasst}$) und Schätzen eines zukünftigen Risikos durch Erzeugen einer Risikokarte unter Verwendung des angepassten Parameterwerts ($\alpha_{angepasst}$) und
- Erzeugen eines Ausgangssignals zum Kommunizieren des geschätzten Risikos an den Bediener.

16. Nicht-transitorisches computerlesbares Speicherungsmedium, das ein Programm maschinenlesbarer Anweisungen verkörpert, die durch eine digitale Verarbeitungseinrichtung ausführbar sind, die die digitale Verarbeitungseinrichtung veranlassen, durchzuführen:

- Anwenden eines Verhaltensplanungsalgorithmus unter Verwendung mindestens eines ersten Werts eines Parameters ($\alpha$, $\beta$, $\gamma$) und eines zweiten Werts eines Parameters ($\alpha$, $\beta$, $\gamma$) in einer Kostenfunktion des Verhaltensplanungsalgorithmus, um mindestens ein erstes und ein zweites geplantes Verhalten (12, 13) des Ego-Agenten (4) zu bestimmen,
- Bestimmen eines aktuellen Zustands des Ego-Agenten (4), um ein tatsächliches Verhalten des Ego-Agenten (4) zu bestimmen,
- Schätzen eines personalisierten Parameterwerts ($\alpha_{geschätzt}$) für den Parameter ($\alpha$, $\beta$, $\gamma$) in der Kostenfunktion basierend auf einer Beziehung des mindestens ersten und zweiten geplanten Verhaltens (12, 13) und eines tatsächlichen Verhaltens des Ego-Agenten (4),
- Bestimmen eines Parameterkorrekturwerts mindestens basierend auf dem personalisierten Parameterwert und einem Zielparameterwert für den Parameter ($\alpha$, $\beta$, $\gamma$) in der Kostenfunktion,
- Erzeugen eines angepassten Parameterwerts ($\alpha_{angepasst}$) für den Parameter ($\alpha$, $\beta$, $\gamma$) in der Kostenfunktion durch Korrigieren des personalisierten Parameterwerts unter Verwendung des Parameterkorrekturwerts;
- Anwenden des Verhaltensplanungsalgorithmus basierend auf dem angepassten Parameterwert und Schätzen eines Risikos durch Erzeugen einer Risikokarte unter Verwendung des angepassten Parameterwerts ($\alpha_{angepasst}$) und
- Erzeugen eines Ausgangssignals zum Kommunizieren des geschätzten Risikos an den Bediener.

17. Assistenzsystem zum Unterstützen eines Ego-Agenten (4), wobei das System einen Prozessor umfasst, der ausgelegt ist zum

- Anwenden eines Verhaltensplanungsalgorithmus unter Verwendung mindestens eines ersten Werts eines Parameters ($\alpha$, $\beta$, $\gamma$) und eines zweiten Werts eines Parameters ($\alpha$, $\beta$, $\gamma$) in einer Kostenfunktion des Verhaltensplanungsalgorithmus, um mindestens ein erstes und ein zweites geplantes Verhalten (12, 13) des Ego-Agenten (4) zu bestimmen,
- Bestimmen eines aktuellen Zustands des Ego-Agenten (4), um ein tatsächliches Verhalten des Ego-Agenten (4) zu bestimmen,
- Schätzen eines personalisierten Parameterwerts ($\alpha_{geschätzt}$) für den Parameter ($\alpha$, $\beta$, $\gamma$) in der Kostenfunktion basierend auf einer Beziehung des mindestens ersten und zweiten geplanten Verhaltens (12, 13) und des tatsächlichen Verhaltens des Ego-Agenten (4),
- Bestimmen eines Parameterkorrekturwerts mindestens basierend auf dem personalisierten Parameterwert und einem Zielparameterwert für den Parameter in der Kostenfunktion,
- Erzeugen eines angepassten Parameterwerts ($\alpha_{angepasst}$) für den Parameter ($\alpha$, $\beta$, $\gamma$) in der Kostenfunktion durch Korrigieren des personalisierten Parameterwerts unter Verwendung des Parameterkorrekturwerts;
- Anwenden des Verhaltensplanungsalgorithmus basierend auf dem angepassten Parameterwert ($\alpha_{angepasst}$) und Schätzen eines Risikos durch Erzeugen einer Risikokarte unter Verwendung des angepassten Parameterwerts ($\alpha_{angepasst}$) und
- Kommunizieren des geschätzten Risikos an den Bediener.

**Revendications**

1. Procédé pour aider un opérateur d'un ego-agent (4) en communiquant un risque dans une situation future à l'opérateur, le procédé comprenant les étapes suivantes :

- appliquer un algorithme de planification de comportement en utilisant au moins une première valeur pour un paramètre ($\alpha$, $\beta$, $\gamma$) et une seconde valeur pour le paramètre ($\alpha$, $\beta$, $\gamma$) dans une fonction de coût de l'algorithme de planification de comportement pour déterminer au moins un premier et un second comportement planifié (12, 13) de l'ego-agent (4),
- déterminer un état actuel de l'ego-agent (4) pour déterminer un comportement réel de l'ego-agent (4),
- estimer une valeur de paramètre personnali-

sée ($\gamma_{estimated}$) pour le paramètre ($\alpha$, $\beta$, $\gamma$) dans la fonction de coût sur la base d'une relation des au moins premier et second comportements planifiés (12, 13) et du comportement réel de l'ego-agent (4),
- déterminer une valeur de correction de paramètre au moins sur la base de la valeur de paramètre personnalisée et d'une valeur de paramètre cible pour le paramètre ($\alpha$, $\beta$, $\gamma$) dans la fonction de coût,
- générer une valeur de paramètre adaptée ($\alpha_{adapted}$) pour le paramètre ($\alpha$, $\beta$, $\gamma$) dans la fonction de coût en corrigeant la valeur de paramètre personnalisée en utilisant la valeur de correction de paramètre,
- appliquer l'algorithme de planification de comportement sur la base de la valeur de paramètre adaptée ($\alpha_{adapted}$) et estimer un risque futur en générant une carte de risque en utilisant la valeur de paramètre adaptée ($\alpha_{adapted}$), et
- communiquer le risque estimé à l'opérateur.

2. Procédé selon la revendication 1, dans lequel

- le fait d'estimer la valeur de paramètre personnalisée ($\gamma_{estimated}$) inclut le fait d'interpoler le comportement réel avec les au moins premier et second comportements planifiés en comparant des valeurs d'accélération des au moins premier et second comportements planifiés (12, 13) de l'ego-agent (4) et du comportement réel de l'ego-agent (4).

3. Procédé selon la revendication 1 ou 2, dans lequel

- le fait d'estimer la valeur de paramètre personnalisée ($\gamma_{estimated}$) inclut le fait de comparer une accélération du comportement réel à une accélération selon au moins les premier et second comportement planifiés (12, 13).

4. Procédé selon quelconques des revendications précédentes, dans lequel

- la valeur de correction de paramètre est calculée sur la base d'une différence entre la valeur de paramètre cible et la valeur de paramètre personnalisée, et d'un coefficient de correction.

5. Procédé selon la revendication 4, dans lequel une valeur du coefficient de correction est déterminée sur la base d'au moins une parmi : une différence entre les valeurs de paramètre personnalisée et cible, et une condition d'opérateur.

6. Procédé selon quelconques des revendications précédentes, dans lequel

- le fait d'estimer la valeur de paramètre personnalisée est exécuté de façon répétée durant l'opération de l'ego-agent (4).

7. Procédé selon quelconques des revendications précédentes, dans lequel

- la valeur de paramètre personnalisée est estimée sur la base d'une pluralité de valeurs de paramètre réelles estimées sur la base de la relation au moins des premier et second comportement planifiés (12, 13) et du comportement réel de l'ego-agent (4).

8. Procédé selon l'une quelconque des revendications 1 à 6, dans lequel

- la dernière valeur de paramètre personnalisée estimée durant une opération précédente de l'ego-agent (4) est utilisée en tant que valeur de paramètre personnalisée pour l'estimation de risque d'une opération actuelle.

9. Procédé selon l'une quelconque des revendications 1 à 6, dans lequel

- la dernière valeur de paramètre personnalisée estimée durant une opération précédente de l'ego-agent (4) est mise à jour avec la valeur de paramètre personnalisée estimée durant l'opération actuelle de l'ego-agent (4) et le paramètre personnalisé mis à jour est utilisé en tant que valeur de paramètre personnalisée pour l'estimation de risque de l'opération actuelle.

10. Procédé selon quelconques des revendications précédentes, dans lequel

- des valeurs de paramètre réelles sont estimées de façon répétée sur la base de la relation des au moins premier et second comportements planifiés (12, 13) et d'un comportement réel de l'ego-agent (4) et une mesure de confiance est calculée pour une toute dernière valeur de paramètre réelle, qui est adoptée en tant que valeur de paramètre personnalisée lorsque sa mesure de confiance dépasse un niveau de confiance.

11. Procédé selon quelconques des revendications précédentes, dans lequel

- les valeurs du paramètre ($\alpha$, $\beta$, $\gamma$) sont dans un intervalle et une limite inférieure de l'intervalle est utilisée en tant que première valeur du paramètre ($\alpha$, $\beta$, $\gamma$) et une limite supérieure de l'intervalle est utilisée en tant que seconde valeur du paramètre ($\alpha$, $\beta$, $\gamma$).

**12.** Procédé selon quelconques des revendications précédentes, dans lequel

- la fonction de coût comprend, en plus d'un composant de risque, au moins un parmi : un composant d'utilité et un composant de confort, et chaque composant est pondéré avec un paramètre spécialisé ($\alpha$, $\beta$, $\gamma$).

**13.** Procédé selon la revendication 12, dans lequel le procédé est exécuté en ce qui concerne le composant de risque, et, de plus, en ce qui concerne au moins un parmi le composant d'utilité et le composant de confort.

**14.** Procédé selon quelconques des revendications précédentes, dans lequel

- un développement de la valeur de correction au fil du temps est évalué et un retour sur le résultat d'évaluation est fourni à l'opérateur.

**15.** Programme, comprenant des moyens codes de programme pour exécuter un procédé pour aider un opérateur d'un ego-agent (4), lorsque le programme est exécuté sur un ordinateur ou processeur de signal numérique, dans lequel le procédé comprend les faits :

- d'appliquer un algorithme de planification de comportement en utilisant au moins une première valeur d'un paramètre ($\alpha$, $\beta$, $\gamma$) et une seconde valeur du paramètre ($\alpha$, $\beta$, $\gamma$) dans une fonction de coût de l'algorithme de planification de comportement pour déterminer au moins un premier et un second comportement planifié,
- de déterminer un état actuel de l'ego-agent (4) pour déterminer un comportement réel,
- d'estimer une valeur de paramètre personnalisée ($\gamma_{estimated}$) pour le paramètre ($\alpha$, $\beta$, $\gamma$) dans la fonction de coût sur la base d'une relation des au moins premier et second comportements planifiés (12, 13) de l'ego-agent (4) et d'un comportement réel de l'ego-agent (4),
- déterminer une valeur de correction de paramètre au moins sur la base de la valeur de paramètre personnalisée et d'une valeur de paramètre cible pour le paramètre ($\alpha$, $\beta$, $\gamma$) dans la fonction de coût,
- de générer une valeur de paramètre adaptée ($\alpha_{adapted}$) pour le paramètre ($\alpha$, $\beta$, $\gamma$) dans la fonction de coût en corrigeant la valeur de paramètre personnalisée ($\alpha_{estimated}$) en utilisant la valeur de correction de paramètre,
- appliquer l'algorithme de planification de comportement sur la base de la valeur de paramètre adaptée ($\alpha_{adapted}$) et estimer un risque futur en générant une carte de risque en utilisant la valeur de paramètre adaptée ($\alpha_{adapted}$), et
- de générer un signal de sortie pour communiquer le risque estimé à l'opérateur.

**16.** Support de stockage non transitoire lisible par ordinateur, incorporant un programme d'instructions lisibles par machine exécutables par un appareil de traitement numérique, qui amènent l'appareil de traitement numérique à réaliser les faits :

- d'appliquer un algorithme de planification de comportement en utilisant au moins une première valeur d'un paramètre ($\alpha$, $\beta$, $\gamma$) et une seconde valeur du paramètre ($\alpha$, $\beta$, $\gamma$) dans une fonction de coût de l'algorithme de planification de comportement pour déterminer au moins un premier et un second comportement planifié (12, 13) de l'ego-agent (4),
- déterminer un état actuel de l'ego-agent (4) pour déterminer un comportement réel de l'ego-agent (4),
- d'estimer une valeur de paramètre personnalisée ($\gamma_{estimated}$) pour le paramètre ($\alpha$, $\beta$, $\gamma$) dans la fonction de coût sur la base d'une relation des au moins premier et second comportements planifiés (12, 13) et d'un comportement réel de l'ego-agent (4),
- déterminer une valeur de correction de paramètre au moins sur la base de la valeur de paramètre personnalisée et d'une valeur de paramètre cible pour le paramètre ($\alpha$, $\beta$, $\gamma$) dans la fonction de coût,
- de générer une valeur de paramètre adaptée ($\alpha_{adapted}$) pour le paramètre ($\alpha$, $\beta$, $\gamma$) dans la fonction de coût en corrigeant la valeur de paramètre personnalisée en utilisant la valeur de correction de paramètre,
- d'appliquer l'algorithme de planification de comportement sur la base de la valeur de paramètre adaptée et d'estimer un risque en générant une carte de risque en utilisant la valeur de paramètre adaptée ($\alpha_{adapted}$), et
- de générer un signal de sortie pour communiquer le risque estimé à l'opérateur.

**17.** Système d'aide pour aider un ego-agent (4), le système comprend un processeur configuré pour

- appliquer un algorithme de planification de comportement en utilisant au moins une première valeur d'un paramètre ($\alpha$, $\beta$, $\gamma$) et une seconde valeur du paramètre ($\alpha$, $\beta$, $\gamma$) dans une fonction de coût de l'algorithme de planification de comportement pour déterminer au moins un premier et un second comportement planifié (12, 13) de l'ego-agent (4),
- déterminer un état actuel de l'ego-agent (4) pour déterminer un comportement réel de l'ego-agent (4),

- estimer une valeur de paramètre personnalisée ($\gamma_{estimated}$) pour le paramètre ($\alpha$, $\beta$, $\gamma$) dans la fonction de coût sur la base d'une relation des au moins premier et second comportements planifiés (12, 13) et du comportement réel de l'ego-agent (4),

- déterminer une valeur de correction de paramètre au moins sur la base de la valeur de paramètre personnalisée et d'une valeur de paramètre cible pour le paramètre dans la fonction de coût,

- de générer une valeur de paramètre adaptée ($\alpha_{adapted}$) pour le paramètre ($\alpha$, $\beta$, $\gamma$) dans la fonction de coût en corrigeant la valeur de paramètre personnalisée en utilisant la valeur de correction de paramètre,

- appliquer l'algorithme de planification de comportement sur la base de la valeur de paramètre adaptée ($\alpha_{adapted}$) et estimer un risque en générant une carte de risque en utilisant la valeur de paramètre adaptée ($\alpha_{adapted}$), et

- communiquer le risque estimé à l'opérateur.

| Safety preference | Utility preference | Comfort preference |
|---|---|---|
| | | |
| Brake for low risk → $\alpha$ high | High speed for overtaking → $\beta$ high | Wait to not change behavior often → $\gamma$ high |

## FIG. 1

P(future collision)

Velocity
V
risk
brake
t
Future time

## FIG. 2

target velocity

target acceleration

## FIG. 3

FIG. 4

VEHICLE STATES → [Estimation personalized parameter value] → $\alpha_{estimated}$ → [correction] → $\alpha_{adapted}^{(k)}$ → [Risk Model $R(\alpha(k))$] → WARNING SIGNAL → [output device]

VEHICLE STATES

FIG. 5

$\alpha_{normal}$

confident ($\alpha=0$)    defensive ($\alpha=1$)

$\alpha_{adapted}^{(k)}$    $\alpha_{estimated}$

FIG. 6

EP 4 530 143 B1

**EP 4 530 143 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2022315047 A1
- US 9623878 B2
- US 2020387156 A1
- US 9463797 B2
- US 10627812 B2
- US 20200231149 A1
- EP 4068153 A1